# EUROPEAN PATENT APPLICATION

(11) **EP 4 582 514 A1**
(43) Date of publication of application: **09.07.2025**
(21) Application number: 24221680.2
(22) Date of filing: 19.12.2024
(51) Int. Cl.: C10B 53/07, C10G 1/10

(54) **PYROLYSIS REACTOR AND APPARATUS HAVING SAME FOR RECOVERING CARBON FIBER AND GLASS FIBER**

(30) Priority: 05.01.2024 KR 20240001954
(71) Applicant: Doosan Enerbility Co., Ltd., Seongsan-gu Changwon-si, Gyeongsangnam-do 51711 (KR)
(72) Inventor: CHO, Sung Jin, 50976 Gimhae-si, Gyeongsangnam-do (KR)
(74) Representative: BCKIP Part mbB

(57) **Abstract**

Proposed are a pyrolysis reactor and an apparatus having the same for recovering carbon fiber and glass fiber. The pyrolysis reactor includes an inner casing, a shaft, at least one movement module, and at least one stirring module. The movement module moves a waste composite material within the inner casing, and the stirring module mixes the waste composite material with hot air within the inner casing. By effectively transferring heat to the waste composite material by using the stirring module, time required for a pyrolysis process is decreased.

## Description

The present application claims the priority to Korea Patent Application No. 10-2024-0001954, filed on January 5, 2024.

### BACKGROUND

### 1. Technical Field

The present disclosure relates to a pyrolysis reactor and an apparatus having the same for recovering carbon fiber and glass fiber.

### 2. Description of the Related Art

Wind power generation is a method of power generation that converts the kinetic energy of wind into mechanical energy by rotating blades, and then converts the mechanical energy into electrical energy. The use of the method is increasing as an alternative to existing power generation methods that mainly use fossil fuels.

A wind turbine has a plurality of blades mounted on a rotating shaft thereof. To produce more electrical energy, the blades are made long and wide. As the size of each of the blades increases, the weight of the blade increases. However, the blade is required to be made as light as possible for energy efficiency. Additionally, since the blade is constantly exposed to wind, the strength of the blade is required to be improved to ensure durability thereof. To solve these problems, carbon fiber reinforced plastic or glass fiber reinforced plastic is used as the material of the blade. A composite material containing carbon fiber and glass fiber is lightweight yet highly strong, and is used in a variety of fields, such as automobiles, and aviation, etc. in addition to blades.

However, once the blades of a wind turbine break or reach the end of their lifespan, disposal of waste blades becomes a problem. Typically, composite materials such as carbon fiber reinforced plastic or glass fiber reinforced plastic are difficult to recycle and are often landfilled. However, it is impossible to continue to landfill the increasing volume of composite material waste, and the need for non-landfill treatment methods or recycling methods continues to arise.

Accordingly, there is a need to develop a reactor and a recovery apparatus capable of effectively recovering a carbon fiber or a glass fiber from waste blades which have reached the end of their lifespan. Additionally, there is a need to develop an apparatus and a method capable of recovering carbon fibers and glass fibers contained in a waste composite material generated by the automobile industry, and aviation industry, in addition to waste blades.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and an objective of the present disclosure is to provide a pyrolysis reactor and an apparatus for recovering carbon fiber and glass fiber, in which it is possible to recover recycled fibers in a short period of time by maximizing heat transfer efficiency.

A pyrolysis reactor according to the embodiment of the present disclosure includes an inner casing, a shaft, at least one movement module, and at least one stirring module. The inner casing is formed in a cylindrical shape. The shaft may be disposed at a radial center of the inner casing, and may extend in a longitudinal direction of the inner casing. The movement module may be fixed on the shaft. The stirring module may be fixed on the shaft and arranged alternately with the movement module.

The pyrolysis reactor according to the embodiment of the present disclosure may further include: a heating furnace including a burner and accommodating the inner casing therein.

In the pyrolysis reactor according to the embodiment of the present disclosure, the movement module may include: a plurality of horizontal supports having first ends extending in horizontal directions from the shaft, a plurality of vertical supports having first ends extending in vertical directions from the shaft, and a spiral wing connected to a second end of each of the horizontal supports and a second end of each of the vertical supports and having a predetermined width.

In the pyrolysis reactor according to the embodiment of the present disclosure, the stirring module may include a plurality of stirring plates arranged at equal angular intervals on the shaft. Each of the stirring plates may include: a horizontal plate having an 'n' shape, with the horizontal plate having an end fixed on the shaft and being deployed in a horizontal direction, and a vertical plate having a rectangular shape and extending perpendicularly on the horizontal plate.

The pyrolysis reactor according to the embodiment of the present disclosure may further include: a feeding part arranged on a first side of the heating furnace and connected to an end part of a first side of the inner casing.

The pyrolysis reactor according to the embodiment of the present disclosure may further include: a discharging part arranged on a second side of the heating furnace and connected to an end part of a second side of the inner casing.

In the pyrolysis reactor according to the embodiment of the present disclosure, combustion gas of 400 to 500 °C may be supplied into the inner casing.

In the pyrolysis reactor according to the embodiment of the present disclosure, a distance between an inner wall of the inner casing and the spiral wing may be 4 to 10 mm.

In the pyrolysis reactor according to the embodiment of the present disclosure, a distance between neighboring spirals in the spiral wing may be 0.3 to 0.5 m.

In the pyrolysis reactor according to the embodiment of the present disclosure, a diameter of the shaft may be 0.1 to 0.3 m.

A pyrolysis reactor according to another embodiment of the present disclosure includes an inner casing, a shaft, a movement module, and a stirring module. The inner casing is formed in a cylindrical shape. The shaft may be disposed at a radial center of the inner casing and extend in a longitudinal direction of the inner casing. The stirring module may include a plurality of stirring plates fixed on the shaft and extending in longitudinal directions of the shaft. The movement module may be fixed on each of the stirring plates and deployed in each of the longitudinal directions of the shaft.

In the pyrolysis reactor according to the another embodiment of the present disclosure, the stirring plate may include: a horizontal plate having an 'n' shape, with the horizontal plate having an end fixed on the shaft and being deployed in a horizontal direction, and a vertical plate having a rectangular shape and extending perpendicularly on the horizontal plate.

An apparatus for recovering carbon fiber and glass fiber according to an embodiment of the present disclosure includes a waste composite material supply unit, a reaction unit configured to heat a waste composite material supplied from the waste composite material supply unit, a heat supply unit configured to supply heat to the reaction unit, and a separation unit including a separation part configured to separate a product of the reaction unit into a first material and a second material, a first chamber configured to accommodate the first material, and a second chamber configured to accommodate the second material. The reaction unit may include at least one pyrolysis reactor. The pyrolysis reactor includes an inner casing, a shaft, at least one movement module, and at least one stirring module. The inner casing is formed in a cylindrical shape. The shaft may be disposed at a radial center of the inner casing and extend in a longitudinal direction of the inner casing. The movement module may be fixed on the shaft. The stirring module may be fixed on the shaft and arranged alternately with the movement module.

In the apparatus for recovering carbon fiber and glass fiber according to the embodiment of the present disclosure, the pyrolysis reactor further may include a heating furnace including a burner and accommodating the inner casing therein.

In the apparatus for recovering carbon fiber and glass fiber according to the embodiment of the present disclosure, the movement module may include a plurality of horizontal supports having first ends extending in horizontal directions from the shaft, a plurality of vertical supports having first ends extending in vertical directions from the shaft, and a spiral wing connected to a second end of each of the horizontal supports and a second end of each of the vertical supports and having a predetermined width.

In the apparatus for recovering carbon fiber and glass fiber according to the embodiment of the present disclosure, the stirring module may include a plurality of stirring plates arranged at equal angular intervals on the shaft. Each of the stirring plates may include a horizontal plate having an 'n' shape, with the horizontal plate having an end fixed on the shaft and being deployed in a horizontal direction, and a vertical plate having a rectangular shape and extending perpendicularly on the horizontal plate.

In the apparatus for recovering carbon fiber and glass fiber according to the embodiment of the present disclosure, combustion gas of 400 to 500 °C may be supplied into the inner casing.

In the apparatus for recovering carbon fiber and glass fiber according to the embodiment of the present disclosure, a distance between an inner wall of the inner casing and the spiral wing may be 4 to 10 mm.

In the apparatus for recovering carbon fiber and glass fiber according to the embodiment of the present disclosure, a distance between neighboring spirals in the spiral wing may be 0.3 to 0.5m.

In the apparatus for recovering carbon fiber and glass fiber according to the embodiment of the present disclosure, a diameter of the shaft may be 0.1 to 0.3 m.

According to the embodiment of the present disclosure, it is possible to recover recycled fibers in a short period of time by maximizing heat transfer efficiency.

### BRIEF DESCRIPTION OF THE DRAWINGS

FIG. 1 is a view illustrating a pyrolysis reactor according to an embodiment of the present disclosure;
FIG. 2 is a cross-sectional view illustrating the pyrolysis reactor according to an embodiment of the present disclosure;
FIG. 3 is a view illustrating a transverse cross-section of the pyrolysis reactor according to an embodiment of the present disclosure;
FIG. 4 is a view illustrating a movement module in the pyrolysis reactor according to an embodiment of the present disclosure;
FIG. 5 is a view illustrating a stirring plate in the pyrolysis reactor according to an embodiment of the present disclosure;
FIG. 6 is a view illustrating a stirring module in the pyrolysis reactor according to an embodiment of the present disclosure;
FIGS. 7A and 7B are views illustrating the pyrolysis reactor according to an embodiment of the present disclosure;
FIG. 8 is a view illustrating the movement module and the stirring module in the pyrolysis reactor according to an embodiment of the present disclosure;
FIG. 9 is a view schematically illustrating an apparatus for recovering carbon fiber and glass fiber according to an embodiment of the present invention; and
FIG. 10 is a view illustrating two pyrolysis reactors installed in a stacked manner according to an embodiment of the present disclosure.

### DETAILED DESCRIPTION

Since the present disclosure can be modified in various ways and can have various embodiments, specific embodiments will be exemplified and explained in detail in the detailed description. However, it should be noted that the present disclosure is not limited thereto, and may include all of modifications, equivalents, and substitutions within the spirit and scope of the present disclosure.

Terms used herein are used to merely describe specific embodiments, and are not intended to limit the present disclosure. As used herein, an element expressed as a singular form includes a plurality of elements, unless the context clearly indicates otherwise. Further, it will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, the exemplary embodiments of the present disclosure will be described in detail with reference to the accompanying drawings. It should be noted that like elements are denoted in the drawings by like reference symbols as whenever possible. Further, the detailed description of known functions and configurations that may obscure the gist of the present disclosure will be omitted. For the same reason, some of the elements in the drawings are exaggerated, omitted, or schematically illustrated.

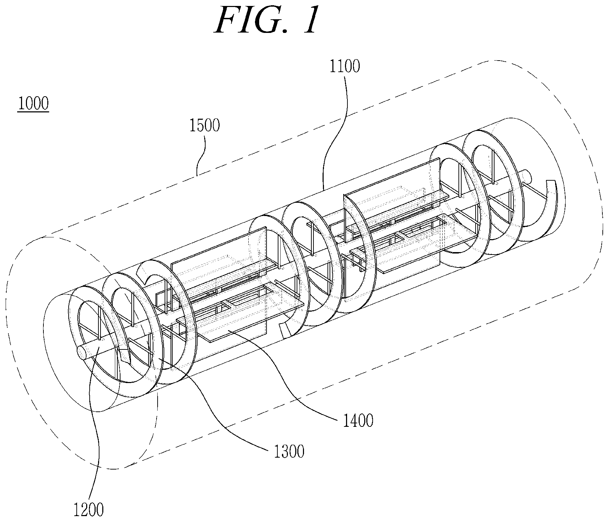

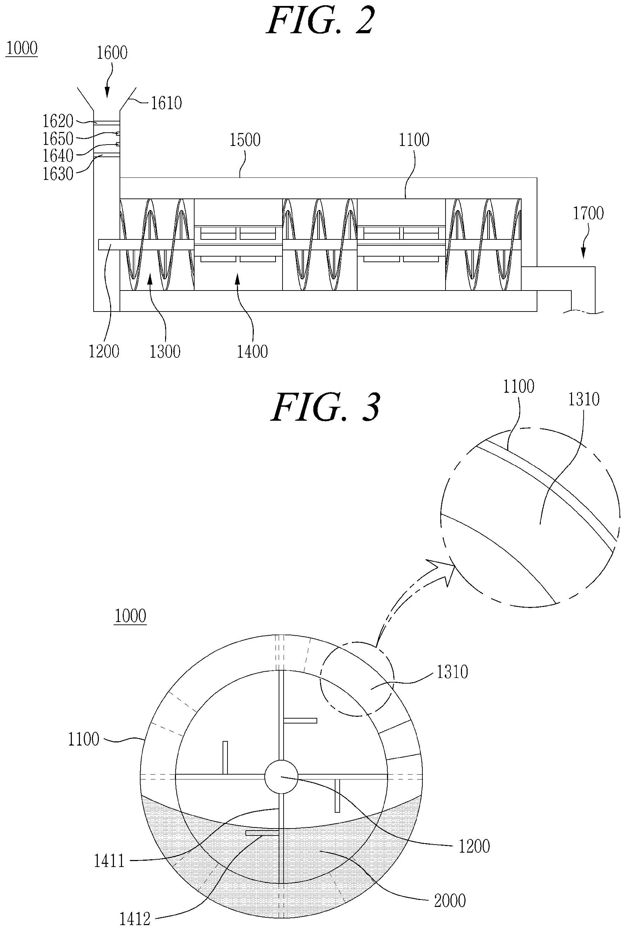

FIG. 1 is a view illustrating a pyrolysis reactor according to an embodiment of the present disclosure, FIG. 2 is a cross-sectional view illustrating the pyrolysis reactor according to an embodiment of the present disclosure, and FIG. 3 is a view illustrating a transverse cross-section of the pyrolysis reactor according to an embodiment of the present disclosure.

As illustrated in FIGS. 1 and 2, a pyrolysis reactor 1000 according to the present disclosure includes an inner casing 1100, a shaft 1200, a movement module 1300, a stirring module 1400, a heating furnace 1500, a feeding part 1600, and a discharging part 1700.

The inner casing 1100 is formed in a cylindrical shape. A waste composite material is pyrolyzed within the inner casing 1100. To maintain a reducing atmosphere during the pyrolysis of the waste composite material, combustion gas is injected into and discharged from the inner casing 1100. Combustion gases of 400 to 500°C may be injected into the inner casing 1100.

The interior of the inner casing 1100 may maintain a reducing atmosphere. To maintain the reducing atmosphere, gas exhausted from the inner casing 1100 may be recirculated into the inner casing. The exhaust gas consists of nitrogen, carbon dioxide, etc. One or more oxygen measuring sensors may be placed within the inner casing 1100. The oxygen measuring sensor continuously measures oxygen concentration inside the inner casing 1100 and controls the oxygen concentration inside the inner casing 1100 to be less than 10%.

The inner casing 1100 has a length sufficient to ensure the residence time of the waste composite material. The residence time may be at least 2 hours. In addition, by injecting air with oxygen concentration of 10% or less into the inner casing 1100, stagnation of the waste composite material may be prevented and the waste composite material may be appropriately mixed with the air.

The shaft 1200 is arranged in the longitudinal direction of the inner casing 1100 at the center of the inner casing 1100. The shaft 1200 may extend outside the inner casing 1100 and may be rotated by a driving part (not shown). By flowing high-temperature gas into the inner casing 1100 along with the rotation of the shaft 1200, stagnation of the waste composite material may be prevented. The high-temperature gas may be exhaust gas and may have oxygen concentration of 10% or less.

The diameter of the shaft 1200 may be 0.1 to 0.3 m. The diameter of the shaft 1200 may be set to increase as the diameter of the inner casing 1100 increases. As the diameter of the shaft 1200 increases, an area receiving heat transfer within the inner casing 1100 decreases, thereby improving the efficiency of heat transfer to the waste composite material. Accordingly, in the present disclosure, heat transfer efficiency may be improved while the diameter of the inner casing 1100 is maintained to be large.

Meanwhile, the shaft 1200 is in the form of a pipe, and high-temperature gas may flow into the internal space of the shaft 1200. The shaft 1200 may be made of a metal material with high thermal conductivity. More heat may be transferred to the waste composite material by the shaft 1200.

The movement module 1300 moves the waste composite material within the inner casing 1100. As illustrated in FIG. 2, the movement module 1300 has a spiral wing fixed to the shaft 1200 by a support.

The stirring module 1400 mixes the waste composite material with hot air within the inner casing 1100. A stirring plate of the stirring module 1400 effectively transfers heat to the waste composite material.

As illustrated in FIG. 3, the waste composite material is located at the lower part of the inner casing 1100, making it difficult to evenly transfer heat to the inside of the inner casing 1100. However, the movement module 1300 and the stirring module 1400 may efficiently transfer heat to the waste composite material while moving and mixing the waste composite material. At least one movement module 1300 and at least one stirring module 1400 may be arranged alternately. In the embodiment illustrated in FIG. 2, three movement modules 1300 and two stirring modules 1400 are arranged alternately, but the present disclosure is not limited thereto, and the movement modules 1300 and the stirring modules 1400, of various lengths and numbers, may be arranged alternately.

The residence time of the waste composite material may be controlled by adjusting the length of the stirring module 1400. The length of the stirring module 1400 is designed by considering the residence time during the design of the reaction of the pyrolysis, and the residence time is determined by the total length of the inner casing 1100, the length of the stirring module 1400, and the rotation speed of the shaft 1200. The material of each of the shaft 1200, the movement module 1300, and the stirring module 1400 may be metal with high thermal conductivity. As the radius of the shaft 1200 increases, the radial width of the stirring plate in the stirring module 1400 decreases. Accordingly, the area of the stirring plate to which heat is transferred decreases, and as the stirring plate receives more heat per unit area, the stirring plate may effectively transfer high-temperature heat to the waste composite material. The movement module 1300 and the stirring module 1400 will be described in detail later.

The heating furnace 1500 supplies heat to the waste composite material. High-temperature gas is introduced into the heating furnace 1500. The heating furnace 1500 indirectly heats the waste composite material by using the high-temperature gas.

High-temperature gas may be generated by a burner (not shown) disposed outside the heating furnace 1500. The burner combusts pyrolysis gas and LNG to produce combustion gas. The generated high-temperature combustion gas is supplied into the inner casing 1100. The temperature of the combustion gas may be 400 to 500°C.

The feeding part 1600 delivers the fragments of the waste composite material to the inner casing 1100. The feeding part 1600 is disposed on a first side of the heating furnace 1500. The feeding part 1600 is connected to an end of the inner casing 1100.

The feeding part 1600 includes a hopper 1610, a first valve 1620, a second valve 1630, a gas inlet 1640, and a gas outlet 1650. The upper end of the hopper 1610 is open, and the waste composite material is fed through the upper end of the hopper 1610. The hopper 1610 may have a truncated cone shape, which has a larger diameter at the upper end and a diameter decreasing downward therefrom, to facilitate receiving the waste composite material. A tubular passage extends below the hopper 1610.

For the pyrolysis of the waste composite material, air composition within the inner casing 1100 needs to be maintained constant. However, when the feeding part 1600 is opened to supply the waste composite material, outside air is also introduced, which changes gas composition within the inner casing 1100. To prevent this, the feeding part 1600 is provided with the first valve 1620 and the second valve 1630. The first valve 1620 is installed on the upstream side of the passage, and the second valve 1630 is installed on the downstream side of the passage.

The first valve 1620 and the second valve 1630 are not opened simultaneously, but are controlled to be opened sequentially. The first valve 1620 and the second valve 1630 may be opened in a sliding manner, and the degree of the opening may be adjusted depending on the amount of a waste composite material to be fed. In this embodiment, the feeding part 1600 has a double structure formed by the first and second valves 1620 and 1630, but is not limited thereto, and three or more valves may be provided on the feeding part. Each of the valves may move within a predetermined range. As each of the plurality of valves opens, the desired amount of the fragments of the waste composite material may be fed into the inner casing 1100. In addition, the waste composite material may be continuously fed into the inner casing 1100 by these dual valves, and the inflow of oxygen may be minimized during the feeding.

The first valve 1620 may be opened while the second valve 1630 is closed. When the first valve 1620 is closed and the feeding part 1600 is sealed after the first valve 1620 is opened and a predetermined amount of the shredded waste composite material is fed in, the second valve 1630 is opened. Simultaneously with the opening of the second valve 1630, flu gas may be injected through the gas inlet 1640. While the second valve 1630 is opened, the flue gas is supplied into the passage of the feeding part 1600, and when the second valve 1630 is closed again, the flue gas is discharged through the gas outlet 1650. By opening the second valve 1630, the waste composite material is fed into the inner casing 1100. To facilitate the feeding of the waste composite material into the inner casing 1100, the passage of the feeding part 1600 may have a surface inclined toward the inner casing 1100. The inflow of oxygen into the inner casing 1100 may be minimized by the dual valves and the supply of flue gas.

Carbon fiber, glass fiber, and char that have been pyrolyzed are discharged through the discharging part 1700. The discharging part 1700 is disposed on a second side of the heating furnace 1500. The discharging part 1700 is connected to a downstream end part of the inner casing 1100.

A pyrolyzed reactant discharged from the discharging part 1700 may be moved to a reactant collection part (not shown). The reactant collection part accommodates the pyrolyzed reactant. The reactant collection part is connected to the discharging part 1700. The reactant collection part may have a slope formed on a side surface adjacent to the discharging part 1700 so that the pyrolysis product discharged from the discharging part 1700 does not abruptly collide with the bottom surface of the reactant collection part.

The reactant collection part may have a flue gas atmosphere of 100 °C or higher to prevent damage to a recycled fiber due to rapid temperature drop. The reactant collection part collects carbon fiber, glass fiber and char.

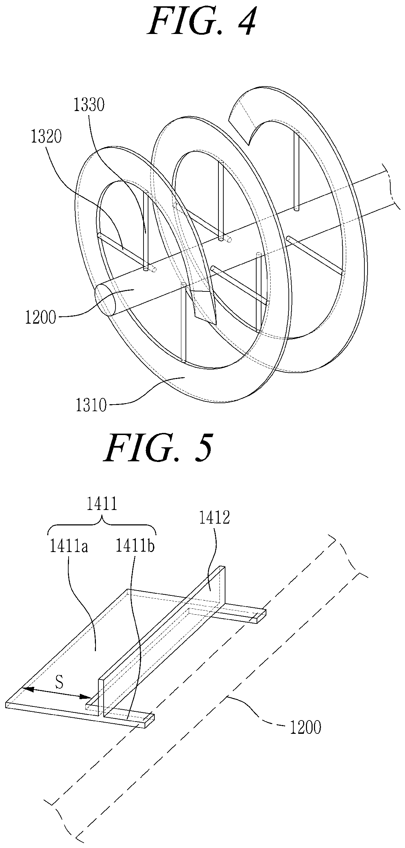

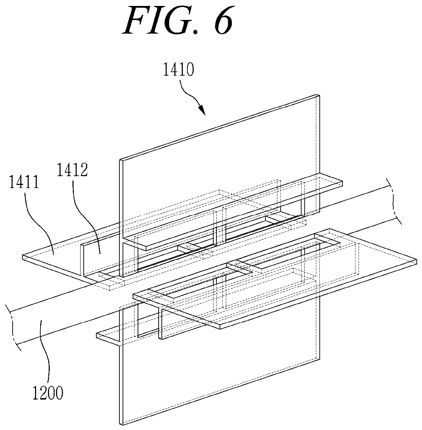

FIG. 4 is a view illustrating a movement module in the pyrolysis reactor according to an embodiment of the present disclosure, FIG. 5 is a view illustrating a stirring plate in the pyrolysis reactor according to an embodiment of the present disclosure, and FIG. 6 is a view illustrating a stirring module in the pyrolysis reactor according to an embodiment of the present disclosure.

The movement module 1300 and the stirring module 1400 will be described in more detail.

As illustrated in FIG. 4, the movement module 1300 includes the spiral wing 1310, horizontal supports 1320, and vertical supports 1330. The spiral wing 1310 is disposed by being spaced apart from the shaft 1200. The spiral wing 1310 is supported by the plurality of horizontal supports 1320, and the plurality of the vertical supports 1330.

Each of the plurality of horizontal supports 1320 has a first end fixed to the shaft 1200 and extends in a horizontal direction. Each of the plurality of horizontal supports 1320 has a second end fixed to the spiral wing 1310 and supports the spiral wing 1310 in the horizontal direction. Each of the plurality of vertical supports 1330 has a first end fixed to the shaft 1200 and extends in a vertical direction. Each of the plurality of vertical supports 1330 has a second end fixed to the spiral wing 1310 and supports the spiral wing 1310 in the vertical direction.

The width of the spiral wing 1310 may be adjusted according to design specification. For example, the width of the spiral wing 1310 may be 10 to 15 cm. A distance between neighboring spirals of the spiral wing 1310 may be set to be different depending on target residence time. For example, the distance between the neighboring spirals of the spiral wing may be 0.3 to 0.5m. The material of the spiral wing 1310 may be metal with high thermal conductivity.

The residence speed of a waste composite material and the state of a reactant may be controlled by controlling the distance of the spiral wing 1310 and the rotation speed of the shaft 1200.

The spiral wing 1310 and the inner wall surface of the inner casing 1100 may be spaced apart from each other by 4 to 10 mm. Since the spiral wing 1310 is spaced apart from the inner wall surface of the inner casing 1100, the durability of the spiral wing 1310 may be guaranteed, and the waste composite material 2000 located on the lower surface of the inner casing 1100 may be effectively moved.

The movement module 1300 moves the waste composite material while the spiral wing 1310 is rotated by the rotation of the shaft 1200. By controlling the rotation speed of the shaft 1200, the residence time of the waste composite material 2000 within the inner casing may be controlled. The spiral wing 1310 is supported by the horizontal support 1320 and the vertical support 1330, thereby preventing the waste composite material 2000 from becoming trapped or stuck in space between the spiral wing 1310 and the shaft 1200. Accordingly, the durability of the movement module 1300 may be improved.

The stirring module 1400 includes a plurality of stirring plates 1410. The plurality of stirring plates 1410 are arranged at equal angular intervals on the shaft 1200. Two to four stirring plates 1410 may be arranged on the shaft 1200.

Each of the stirring plates 1410 includes a horizontal plate 1411, and a vertical plate 1412.

The horizontal plate 1411 has an 'n' shape. The horizontal plate 1411 may transfer heat to the waste composite material by bringing the waste composite material into contact with the surface of the plate. In the horizontal plate 1411, a base part 1411b may have a first end fixed to the shaft and may be deployed in the horizontal direction. A second end of the base part 1411b is connected to a planar part 1411a. The planar part 1411a has a long side extending in the longitudinal direction of the shaft 1200 and a short side extending in the radial direction of the inner casing 1100. The length of the short side, i.e., the width S of the planar part 1411a, may be determined according to the specification of the pyrolysis reactor.

The degree of heat transfer to the waste composite material 2000 varies depending on the width S of the planar part 141 1a. When the width S of the planar part 1411a is large, a larger amount of the waste composite material is in contact with the stirring plate 1410 during the rotation of the stirring plate 1410. When the size of the waste composite material 2000 to be pyrolyzed is large or the amount of the waste composite material 2000 is large, the width S of the planar part 1411a may be increased so that a larger area of the waste composite material 2000 is in contact with the stirring plate 1410 or so that more fragments of the waste composite material 2000 are in contact with the stirring plate 1410.

The waste composite material 2000 is prevented from being trapped or stuck to the stirring plate 1410 as the waste composite material 2000 falls into space between the base part 1411b and the planar part 1411a. In addition, heat is better transferred to the waste composite material 2000, and while the waste composite material 2000 falls from the stirring plate 1410 to the lower surface of the inner casing 1100, the waste composite material 2000 is better mixed with high-temperature air. Accordingly, the efficiency of heat transfer to the waste composite material may be maximized. To further secure the horizontal plate 1411 to the shaft 1200, an additional connection part may be provided between the planar part 1411a and the shaft 1200.

The vertical plate 1412 is arranged on the horizontal plate 1411 in a direction perpendicular to the horizontal plate 1411. The vertical plate 1412 has a rectangular shape, and has a long side extending in the longitudinal direction of the shaft 1200 and a short side extending in the radial direction of the inner casing. The vertical plate 1412 may transfer heat to the waste composite material by bringing the waste composite material into contact with the surface of the plate. In addition, the waste composite material 2000 raised by the horizontal plate 1411 may be in contact with the horizontal plate 1411 and the vertical plate 1412 for a longer period of time without falling down immediately, thereby further improving heat transfer efficiency. The material of the stirring plate 1410 may be metal with high thermal conductivity.

At least one movement module 1300 and at least one stirring module 1400 may be arranged alternately.

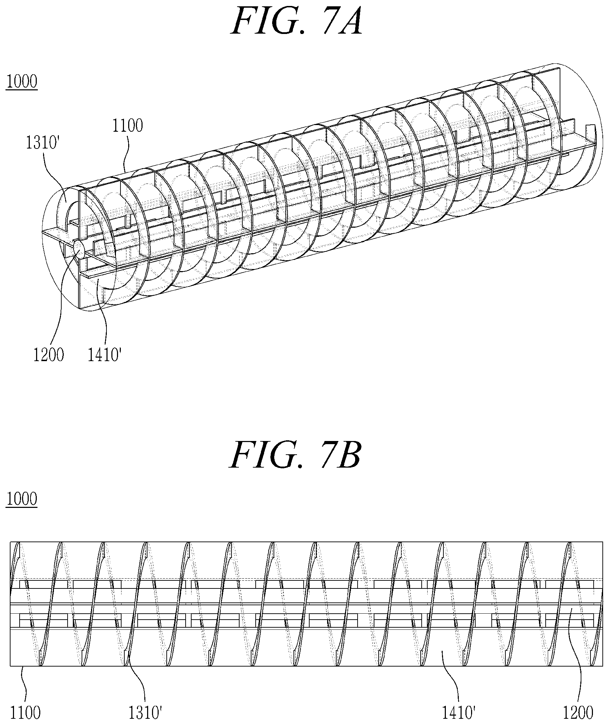

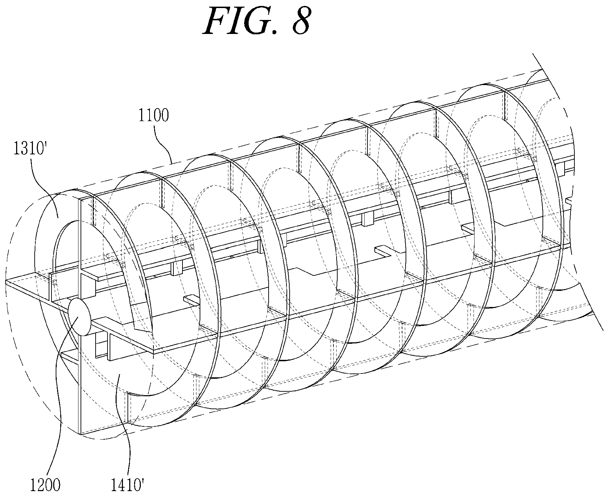

FIGS. 7A and 7B are views illustrating the pyrolysis reactor according to an embodiment of the present disclosure, and FIG. 8 is a view illustrating the movement module and the stirring module in the pyrolysis reactor according to an embodiment of the present disclosure.

In another embodiment, the movement module 1300 and the stirring module 1400 may extend continuously along the longitudinal direction of the shaft and be arranged by overlapping each other within the inner casing 1100.

As illustrated in FIGS. 7A, 7B, and 8, the stirring module 1400 may be fixed on the shaft and may extend along the longitudinal direction of the shaft. The stirring module 1400 includes a plurality of stirring plates 1410'. The plurality of stirring plates 1410' are arranged at equal angular intervals on the shaft 1200. Two to four stirring plates 1410' may be arranged on the shaft 1200. Each of the plurality of stirring plates 1410' extends along the longitudinal direction of the shaft 1200.

The stirring plate 1410' includes a horizontal plate 1411 and a vertical plate 1412.

The horizontal plate 1411 has an 'n' shape. The horizontal plate 1411 may transfer heat to the waste composite material by bringing the waste composite material into contact with the surface of the plate. The width S of the horizontal plate 1411 may be determined depending on the specification of the pyrolysis reactor.

The degree of heat transfer to the waste composite material 2000 varies depending on the width S of the horizontal plate 1411. When the width S of the horizontal plate 1411 is large, a larger amount of the waste composite material is in contact with the stirring plate 1410' during the rotation of the stirring plate 1410'. When the size of the waste composite material 2000 to be pyrolyzed is large or the amount of the waste composite material 2000 is large, the horizontal plate 1411 may be increased so that a larger area of the waste composite material 2000 is in contact with the stirring plate 1410' or so that more fragments of the waste composite material 2000 are in contact with the stirring plate 1410'.

To further secure the horizontal plate 1411 to the shaft 1200, a plurality of additional connection parts may be provided. The waste composite material 2000 is prevented from being trapped or stuck to the stirring plate 1410' as the waste composite material 2000 falls into space between the horizontal plate 1411 and the shaft 1200. In addition, heat is better transferred to the waste composite material 2000, and while the waste composite material 2000 falls from the stirring plate 1410' to the lower surface of the inner casing 1100, the waste composite material 2000 is better mixed with high-temperature air. Accordingly, the efficiency of heat transfer to the waste composite material may be maximized.

The vertical plate 1412 is arranged on the horizontal plate 1411 in a direction perpendicular to the horizontal plate 1411. The vertical plate 1412 has a rectangular shape, and has a long side extending in the longitudinal direction of the shaft 1200 and a short side extending in the radial direction of the inner casing. The vertical plate 1412 may transfer heat to the waste composite material by bringing the waste composite material into contact with the surface of the plate. In addition, by limiting the fall of the waste composite material 2000 raised by the horizontal plate 1411, the waste composite material does not fall directly, but is in contact with the horizontal plate 1411 and the vertical plate 1412 for a longer period of time, thereby further improving heat transfer efficiency. The material of the stirring plate 1410' may be metal with high thermal conductivity.

The movement module 1300 is fixed on one side of the stirring plate 1410' and deployed in the longitudinal direction of the shaft 1200. The movement module 1300 includes the spiral wing 1310'. The spiral wing 1310' is arranged by being spaced apart from the shaft 1200. The spiral wing 1310' is supported by being fitted into the horizontal plate 1411 of the plurality of stirring plates 1410'. For more secure support of the spiral wing 1310', the movement module 1300 may further include a plurality of supports. Each of the plurality of supports may have an end fixed to the shaft 1200 and extend radially to fix the spiral wing 1310'.

The width of the spiral wing 1310' may be adjusted depending on design specification. For example, the width of the spiral wing 1310' may be 10 to 15 cm. A distance between neighboring spirals of the spiral wing 1310' may be set to be different depending on target residence time. For example, the distance between the neighboring spirals of the spiral wing may be 0.3 to 0.5m. The material of the spiral wing 1310' may be metal with high thermal conductivity.

The residence speed of a waste composite material and the state of a reactant may be controlled by controlling the distance of the spiral wing 1310' and the rotation speed of the shaft 1200.

The spiral wing 1310' and the inner wall surface of the inner casing 1100 may be spaced apart from each other by 4 to 10 mm. Since the spiral wing 1310' is spaced apart from the inner wall surface of the inner casing 1100, the durability of the spiral wing 1310' may be guaranteed, and the waste composite material 2000 located on the lower surface of the inner casing 1100 may be effectively moved.

The movement module 1300 moves the waste composite material while the spiral wing 1310' is rotated by the rotation of the shaft 1200. By controlling the rotation speed of the shaft 1200, the residence time of the waste composite material 2000 within the inner casing 1100 may be controlled. Since the spiral wing 1310' is spaced apart from the shaft 1200 and supported by the horizontal plate 1411 of the stirring plate 1410', the waste composite material 2000 may be prevented from being trapped or stuck in space between the spiral wing 1310', the stirring plate 1410', and the shaft 1200. Accordingly, the durability of the movement module 1300 may be improved.

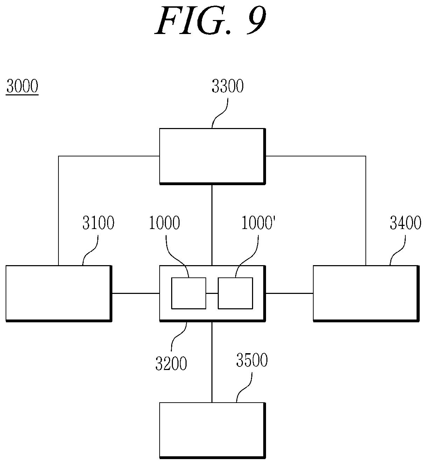

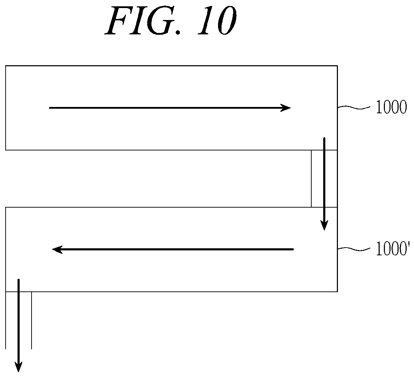

FIG. 9 is a view schematically illustrating an apparatus for recovering carbon fiber and glass fiber according to an embodiment of the present invention, and FIG. 10 is a view illustrating two pyrolysis reactors installed in a stacked manner according to an embodiment of the present disclosure.

As illustrated in FIG. 9, an apparatus 3000 for recovering carbon fiber and glass fiber includes a waste composite material supply unit 3100, a reaction unit 3200, a heat supply unit 3300, a reforming unit 3400, and a separation unit 3500.

The waste composite material supply unit 3100 supplies the waste composite material to the reaction unit 3200. The waste composite material supply unit 3100 may pretreat the waste composite material to a state suitable for pyrolysis and supply the pretreated waste composite material to the reaction unit 3200.

The waste composite material supply unit 3100 includes a shredding module, a transport module, a storage module, and a feeding module. The shredding module shreds a collected waste composite material to a predetermined size and transports the collected waste composite material to the storage module via the transport module. The shredding module may shred the waste composite material, which is cut to the predetermined length, to have thickness of 20 mm or less. Meanwhile, the shredding module may adjust the shredding size of the cut waste composite material. The shredding size of the waste composite material may be adjusted depending on the target condition and final product of the waste composite material. When recovery of long fibers is possible, the shredding sizes of waste blades may be increased.

In the recovery process, a conveyor may be used to transport the waste composite material to each unit and each module. A plurality of conveyors may be installed in succession or in parallel depending on the movement path of the waste composite material. The waste composite material may be screened during the transportation.

In order to reduce the generation of water vapor during the pyrolysis process of the waste composite material, hot air may be supplied to the storage module to dry a stored waste composite material.

The feeding module feeds the waste composite material into the pyrolysis reactor 1000 of the reaction unit 3200. A single-shaft screw feeder may be used to feed the shredded waste composite material. The feeding module may feed the waste composite material into the feeding part 1600 of the pyrolysis reactor 1000 either one-time or continuously.

Meanwhile, it is necessary to lower the temperature of the waste composite material placed in the feeding module 1140. A cooling jacket may be disposed on each of the lower surface and side surface of the feeding module 1140 to cool the waste composite material. The pyrolysis reactor, which is connected to the lower part of an inlet, is at a high temperature due to high-temperature gas flowing inside. By arranging the cooling jacket on each of the lower surface and side surface of the feeding module 1140, heat emitted from the pyrolysis reactor is transferred to the feeding module 1140, preventing a fire from occurring in a waste blade located within the feeding module 1140 before being fed into the pyrolysis reactor. The cooling jacket may lower the temperature of the fed waste composite material by receiving cold water from the cooling tower of the reforming unit.

The reaction unit 3200 receives the waste composite material from the waste composite material supply unit 3100 and pyrolyzes the waste composite material. The reaction unit 3200 includes at least one pyrolysis reactor 1000. The pyrolysis reactor 1000 may include the inner casing 1100, the shaft 1200, the movement module 1300, the stirring module 1400, the heating furnace 1500, the feeding part 1600, and the discharging part 1700.

Since the pyrolysis reactor 1000 has been described above, a description thereof is omitted.

The waste composite material fed into the pyrolysis reactor 1000 is pyrolyzed within the pyrolysis reactor 1000. The pyrolysis stage may go through a first pyrolysis stage and a second pyrolysis stage. Resin such as epoxy and wood contained in the waste composite material are gasified by the first pyrolysis. Resin and char remaining in the lump of the carbon fiber and the glass fiber are pyrolyzed by the second pyrolysis. The internal temperature of the pyrolysis reactor 1000 may be 400 to 600°C during the first pyrolysis and second pyrolysis.

The first pyrolysis and the second pyrolysis may be performed by the pyrolysis reactor 1000. Two or more pyrolysis reactors may be connected to each other and used by considering the residence time of the waste composite material in the reactor and the size of the waste composite material to be introduced, etc. For example, the reaction unit 3200 may include one first pyrolysis reactor 1000 and one second pyrolysis reactor 1000'. Alternatively, to secure residence time during the first pyrolysis, the reaction unit 3200 may include two first pyrolysis reactors 1000 and one second pyrolysis reactor 1000'.

The first pyrolysis reactor 1000 for the first pyrolysis and the second pyrolysis reactor 1000' for the second pyrolysis may be connected to each other horizontally or vertically. As illustrated in FIG. 10, when a plurality of pyrolysis reactors are connected vertically, the size of the entire plant may be reduced, and the degree of freedom in design may be increased.

During the first pyrolysis, oxygen concentration within the first pyrolysis reactor 1000 is required to be maintained to be 10% or less. A sensor may be placed inside the first pyrolysis reactor 1000 to continuously measure the oxygen concentration. In another embodiment, a sensor may be placed in an exhaust line to measure oxygen concentration in exhausted gas.

The residence time of fragments of the waste composite material in the first pyrolysis reactor 1000 during the first pyrolysis may be 9 hours or less. When the residence time is more than 9 hours, reactants may be excessively carbonized. A temperature inside the first pyrolysis reactor 1000 may be 400 to 500°C.

As a result of the first pyrolysis, resin such as epoxy and wood contained in the waste composite material are gasified and the lump of carbon fiber and glass fiber remains as a product in the first pyrolysis reactor 1000. In this case, resin that is not gasified is carbonized (charred) and remains on the surfaces of the carbon fiber and glass fiber.

As the product of the process of the first pyrolysis, in addition to gas and char, oil vapor is generated. The oil vapor is cooled while the oil vapor passes through the reforming unit 3400, and some of the oil vapor may be extracted as gas and some thereof may be extracted as oil. The oil vapor may be cooled by water. The gas generated from the oil vapor may have a calorific value and flow into the gas tank of the heat supply unit 1300 to be used as an indirect heat source for the second pyrolysis.

The second pyrolysis may be performed in the second pyrolysis reactor 1000'. The second pyrolysis is a combustion reaction. The lump of the carbon fiber and the glass fiber from which some char has been removed is transferred to the second pyrolysis reactor 1000'. At this stage, the carbon fiber and glass fiber may have char stuck between the fibers. In the process of the second pyrolysis, combustion gas containing about 10% oxygen burns the remaining epoxy and char. The remaining epoxy and char are removed by the second pyrolysis process, i.e., the combustion process, and only the carbon fiber and the glass fiber remain.

A heat source for the second pyrolysis may be combustion gas. The temperature of the combustion gas injected into the second pyrolysis reactor 1000' may be 500 to 600°C, preferably 500°C. Oxygen concentration in the combustion gas may be approximately 10%. Resin and char remaining in the lump of the carbon fiber and the glass fiber are pyrolyzed by a combustion reaction within the second pyrolysis reactor 1000'.

The residence time of the lump of the carbon fiber and glass fiber in the second pyrolysis reactor 1000' may be 3 hours or less. In this case, when oxygen concentration inside the second pyrolysis reactor 1000' is high, oxidation of a heating target may occur, so the oxygen concentration is maintained at 10% or less.

As the result of the second pyrolysis, carbon fiber and glass fiber with high purity remain.

The heat supply unit 3300 may include a burner, a heat exchanger, an air blower, a scrubber, and a chimney. Heat energy required for pyrolysis reaction may be supplied by the burner. The burner may supply combustion gases to the inner casing in the form of indirect heating. The burner may use pyrolysis gas and LNG as fuel. The air blower injects outside air into the heat exchanger to exchange heat with the outside air. The outside air is heated by the heat exchanger and supplied to the storage module.

The scrubber processes waste gas. A dust collection device using NaOH aqueous solution may be used as the scrubber. In this embodiment, a washing dust collection device using NaOH aqueous solution is used, but the scrubber is not limited thereto, and a scrubber using a filtration method or an electrostatic method may also be used. The chimney finally discharges waste gas and by-products.

The reforming unit 3400 may be provided with a catalyst tower, a heat exchanger, a separation tank, a washing tank, a pressure control tank. The reforming unit 3400 converts pyrolysis gas into oil. About 30% of total pyrolysis gas may be converted into pyrolysis oil. This saves the amount of fuel required for pyrolysis.

The catalyst tower may use commercial catalysts of the zeolite series such as ZSM-5, but is not limited thereto. The pyrolysis gas flows into the lower part of the catalyst tower and is reformed as pyrolysis gas flows upward. The heat exchanger cools pyrolysis gas that has passed through the catalyst tower and converts the oil vapor into oil.

The separation tank separates condensed pyrolysis gas into gas and oil. The cooled pyrolysis gas moves to the separation tank. Gaseous pyrolysis gas is discharged from the upper part of the separation tank, and condensed oil is discharged from the lower part of the separation tank. The condensed oil may be stored in a pyrolysis oil storage tank.

Pyrolysis gas discharged from the upper part of the separation tank flows into the washing tank, and foreign substances are removed from the gaseous pyrolysis gas. The washing tank neutralizes the pyrolysis gas to reduce the amount of hydrogen chloride (HCl) in the pyrolysis gas, and the neutralized pyrolysis gas flows to the pressure control tank. The pressure control tank is placed to prevent backflow of the pyrolysis gas before the pyrolysis gas is supplied to the burner. The pyrolysis gas discharged from the pressure control tank may be supplied to the burner.

The reformed pyrolysis gas is used as fuel to heat the first and second pyrolysis reactors 1000 and 1000' again. By reusing the pyrolysis gas as fuel, overall fuel usage may be reduced and pollutant emissions may be reduced.

The separation unit 3500 may include a washing part, a separation part, a first chamber, a second chamber, carding modules, and pelletizing modules. The washing part receives the product of the second pyrolysis and washes the product so that lump of carbon fiber and glass fiber remains, and the separation part separates the product of the second pyrolysis into r-CF (recycled carbon fiber) and r-GF (recycled glass fiber). The r-CF and the r-GF may be separated from each other by using density difference therebetween. There are two methods of utilizing density differences: a dry method and a wet method. The dry method, which uses the flow of air, moves lightweight carbon fibers by causing the flow of air over the product of the second pyrolysis moving on a conveyor.

The wet method is a method of separating a carbon fiber and a glass fiber from each other by using liquid with an intermediate density between that of the carbon fiber and the glass fiber.

The carbon fiber and the glass fiber separated by the separation part may be moved to the first chamber and the second chamber, respectively. The separation of the carbon fiber and the glass fiber may be performed on a conveyor.

The carbon fiber and the glass fiber stored in the first chamber and the second chamber, respectively, may be post-processed for shipment.

The carding modules brush r-CF and r-GF having predetermined lengths. The lengths of the r-CF and the r-GF from which resin has been removed are 50 mm or less. The r-CF and the r-GF are brushed for post-processing since their fiber lengths are short. The brushed r-CF and r-GF are compressed and processed into non-woven fabrics. When the length of each of the r-CF and the r-GF is 5 mm or less, it is not easy to brush the r-CF and the r-GF, and thus the r-CF and the r-GF are not fed into the carding modules. Before the recovered r-CF and r-GF are fed into the carding modules, the r-CF and r-GF with lengths of 5 mm or less may be separated by using a mesh, etc.

The pelletizing modules melt and mix the recovered r-CF, r-GF, and resin to make pellets. The pelletizing modules cut the nonwoven fabrics produced in the carding modules to predetermined sizes and mix them with the melted resin. The r-CF and r-GF nonwoven fabrics having structures hardened by compression are shipped after being cured together with the resin.

The r-CF and the r-GF with lengths of 5 mm or less are fed directly into the pelletizing modules, respectively. The r-CF and the r-GF with lengths of 5 mm or less are directly mixed with resin and pelletized.

A controller may receive the size of the particle of the waste composite material fed into the pyrolysis reactor from the waste composite material supply unit 3100, and may determine whether carbon fibers and glass fibers stored in the first chamber and the second chamber, respectively, should be moved to the pelletizing modules via the carding modules, or directly to the pelletizing modules. The shredding size of the waste composite material may be adjusted during a shredding stage depending on the needs of a user.

In the present disclosure, the shredding and pyrolysis of the waste composite material, and the separation of a carbon fiber and a glass fiber may be performed in one process, and the waste composite material is moved to each unit by a conveyor. One or more conveyors may be linked together to control residence time in each unit.

While the embodiments of the present disclosure have been described, it will be apparent to those skilled in the art that various modifications and variations can be made in the present disclosure through addition, change, omission, or substitution of components without departing from the spirit of the disclosure as set forth in the appended claims, and such modifications and changes may also be included within the scope of the present disclosure.

## Claims

1. A pyrolysis reactor (1000) comprising:
an inner casing (1100) having a cylindrical shape;
a shaft 1200 disposed at a radial center of the inner casing (1100) and extending in a longitudinal direction of the inner casing (1100);
at least one movement module (1300) fixed on the shaft (1200); and
at least one stirring module (1400) fixed on the shaft (1200) and arranged alternately with the movement module (1300).

2. The pyrolysis reactor (1000) of claim 1, further comprising:
a heating furnace (1500) including a burner and accommodating the inner casing (1100) therein.

3. The pyrolysis reactor (1000) of claim 1 or claim 2, wherein the movement module (1300) includes:
a plurality of horizontal supports (1320) having first ends extending in horizontal directions from the shaft (1200);
a plurality of vertical supports (1330) having first ends extending in vertical directions from the shaft (1200); and
a spiral wing (1310) connected to a second end of each of the horizontal supports (1320) and a second end of each of the vertical supports (1330) and having a predetermined width.

4. The pyrolysis reactor (1000) of any claim among claims 1 to 3, wherein the stirring module (1400) includes a plurality of stirring plates (1410) arranged at equal angular intervals on the shaft (1200),
wherein each of the stirring plates (1410) includes:
a horizontal plate (1411) having an 'n' shape, with the horizontal plate (1411) having an end fixed on the shaft (1200) and being deployed in a horizontal direction, and
a vertical plate (1412) having a rectangular shape and extending perpendicularly on the horizontal plate (1411).

5. The pyrolysis reactor (1000) of claim 2, further comprising:
a feeding part (1600) arranged on a first side of the heating furnace (1500) and connected to an end part of a first side of the inner casing (1100).

6. The pyrolysis reactor (1000) of claim 2, further comprising:
a discharging part (1700) arranged on a second side of the heating furnace (1500) and connected to an end part of a second side of the inner casing (1100).

7. The pyrolysis reactor (1000) of any claim among claims 1 to 6, wherein combustion gas of 400 to 500 °C is supplied into the inner casing (1100).

8. The pyrolysis reactor (1000) of claim 3, wherein a distance between an inner wall of the inner casing (1100) and the spiral wing (1310) is 4 to 10 mm.

9. The pyrolysis reactor (1000) of claim 3 or claim 8, wherein a distance between neighboring spirals in the spiral wing (1310) is 0.3 to 0.5 m.

10. An apparatus (3000) for recovering carbon fiber and glass fiber, the apparatus (3000) comprising:
a waste composite material supply unit (3100);
a reaction unit (3200) configured to heat a waste composite material supplied from the waste composite material supply unit (3100);
a heat supply unit (3300) configured to supply heat to the reaction unit (3200);
a reforming unit (3400) configured to separate pyrolysis gas discharged from the reaction unit (3200) into gas and oil; and
a separation unit (3500) including a separation part configured to separate a product of the reaction unit (3200) into a first material and a second material, a first chamber configured to accommodate the first material, and a second chamber configured to accommodate the second material,
wherein the reaction unit (3200) includes at least one pyrolysis reactor (1000),
wherein the pyrolysis reactor (1000) includes:
an inner casing (1100) having a cylindrical shape;
a shaft (1200) disposed at a radial center of the inner casing (1100) and extending in a longitudinal direction of the inner casing (1100);
at least one movement module (1300) fixed on the shaft (1200); and
at least one stirring module (1400) fixed on the shaft (1200) and arranged alternately with the movement module (1300).

11. The apparatus (3000) of claim 10, wherein the pyrolysis reactor (1000) further includes a heating furnace (1500) including a burner and accommodating the inner casing (1100) therein.

12. The apparatus (3000) of claim 10 or claim 11, wherein the movement module (1300) includes:
a plurality of horizontal supports (1320) having first ends extending in horizontal directions from the shaft (1200);
a plurality of vertical supports (1330) having first ends extending in vertical directions from the shaft (1200); and
a spiral wing (1310) connected to a second end of each of the horizontal supports (1320) and a second end of each of the vertical supports (1330) and having a predetermined width.

13. The apparatus (3000) of any claim among claims 10 to 12, wherein the stirring module (1400) includes a plurality of stirring plates (1410) arranged at equal angular intervals on the shaft (1200),
wherein each of the stirring plates (1410) includes:
a horizontal plate (1411) having an 'n' shape, with the horizontal plate (1411) having an end fixed on the shaft (1200) and being deployed in a horizontal direction; and
a vertical plate (1412) having a rectangular shape and extending perpendicularly on the horizontal plate (1411).

14. The apparatus (3000) of any claim among claims 10 to 13, wherein combustion gas of 400 to 500 °C is supplied into the inner casing (1100).

15. The apparatus (3000) of claim 12, wherein a distance between an inner wall of the inner casing (1100) and the spiral wing (1310) is 4 to 10 mm.
